(19) Europäisches Patentamt
European Patent Office
Office européen des brevets

(11) **EP 4 283 817 B1**

(12) **EUROPEAN PATENT SPECIFICATION**

(45) Date of publication and mention
of the grant of the patent:
**11.09.2024 Bulletin 2024/37**

(51) International Patent Classification (IPC):
**H02J 3/40** (2006.01)      **H02J 3/38** (2006.01)

(21) Application number: **22382502.7**

(52) Cooperative Patent Classification (CPC):
**H02J 3/381; H02J 3/40;** H02J 2203/20

(22) Date of filing: **25.05.2022**

(54) **POWER CONVERSION SYSTEM**

LEISTUNGSWANDLUNGSSYSTEM

SYSTÈME DE CONVERSION D'ALIMENTATION

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(43) Date of publication of application:
**29.11.2023 Bulletin 2023/48**

(73) Proprietor: **INGETEAM RESEARCH INSTITUTE, S.L.**
**48170 Zamudio (ES)**

(72) Inventors:
 • **RODRÍGUEZ AMENEDO, José Luis**
   **28911 Leganés (ES)**
 • **ARNALTES GÓMEZ, Santiago**
   **28911 Leganés (ES)**
 • **ZUBIAGA LAZCANO, Markel**
   **48170 Zamudio (ES)**
 • **IZURZA MORENO, Pedro**
   **48170 Zamudio (ES)**

(74) Representative: **Igartua, Ismael**
**Galbaian S. Coop.**
**Garaia Parke Teknologikoa**
**Goiru Kalea 1**
**20500 Arrasate-Mondragón (ES)**

(56) References cited:
**US-A1- 2021 249 862**

 • **RODRIGUEZ-CABERO ALBERTO ET AL: "Synchronverter small-signal modelling and eigenvalue analysis for battery systems integration", 2017 IEEE 6TH INTERNATIONAL CONFERENCE ON RENEWABLE ENERGY RESEARCH AND APPLICATIONS (ICRERA), IEEE, 5 November 2017 (2017-11-05), pages 780 - 784, XP033267162, DOI: 10.1109/ICRERA.2017.8191165**
 • **RODRIGUEZ-AMENEDO JOSE LUIS ET AL: "Black-Start Capability of DFIG Wind Turbines Through a Grid-Forming Control Based on the Rotor Flux Orientation", IEEE ACCESS, IEEE, USA, vol. 9, 15 October 2021 (2021-10-15), pages 142910 - 142924, XP011885409, DOI: 10.1109/ACCESS.2021.3120478**

**Description**

TECHNICAL FIELD

The present invention relates to power conversion systems, and more specifically to power conversion systems comprising at least one electronic converter operating in grid-forming mode (GFM).

PRIOR ART

Power grids are currently evolving towards decarbonized systems, with massive integration of renewable generation dominated by electronic power converters. This new situation is displacing traditional synchronous generation, which was responsible for maintaining stable voltage and frequency conditions in power grids. The massive incorporation of non-synchronous generation may have a significant impact on the stability and robustness of the system if operating requirements similar to those currently provided by synchronous generation are not established for this type of generation

Current generation scenarios in many European power systems show that in certain periods of time a very high percentage of energy demand (>70%) is covered by renewable generation, even proposing scenarios of demand coverage with 100% renewable generation in the coming decades.

The electronic converters currently in service operate in grid-following mode, i.e., they require a stable voltage at their terminals to maintain synchronism with the grid. To maintain synchronism, these converters use a closed-loop phase follower, commonly known as PLL (phase-locked loop), the mode of operation of which is based on determining the position of the grid voltage vector with respect to a stationary reference system so that the control angle generated allows decoupled control of the active and reactive current. The problem with converters operating in grid-following mode is that they operate as current sources and to assure grid stability, grid services are always provided with a certain delay, since before acting it is necessary to measure the voltage and frequency at their terminals, in what is referred to as grid-supporting. For example, the power-frequency (P/f) regulation service is performed by measuring the frequency deviation of the voltage waveform by means of a PLL, to give an increase in active power to be raised or lowered. This method emulates the operation of synchronous generator controllers, but they can cause grid instability when trying to emulate the inertial response of these generators if the penetration of electronic converters is very high.

Frequency deviation is the consequence of the imbalance between the active power generated and consumed in the power system. Converters operating in grid-following mode always provide the service with a delay, when the effect of the power imbalance has already occurred: they measure it through the frequency and act accordingly. In a scenario where generation is mostly synchronous, converters working in this mode would not help in the first instants to maintain the stability of synchronous generators. For this reason, renewable generation plants are normally not allowed to power local loads isolated from the grid and must have a protection known as "anti-islanding".

In summary, electronic converters operating in grid-following mode act as current sources dependent on the voltage measurement at their terminals, which prevents them from providing the grid services required to assure the stability and robust operation of the power system. To solve this problem, electronic converter control systems have recently emerged that aim to make converters behave as Virtual Synchronous Machines (VSM). In particular, in these cases the electronic converter maintains synchronism with the grid, analogous to a synchronous generator, emulating the synchronous generator's synchronism torque by means of a synchronization loop based only on the measurement of the power generated and not on the position of the voltage vector at its terminals. Control systems of this type are known as grid-forming (GFM) systems.

The main objective of the electronic converter operating in GFM mode is to maintain control of an internal voltage capable of ensuring synchronism with the power grid and contributing to its stability in the event of voltage or frequency disturbances. GFMs thus attempt to emulate the behavior of a synchronous generator. The orientation or control angle of the control system, which is initially determined by direct measurement of the voltage at the converter terminals by means of a PLL, is replaced with an active power synchronization loop. The control schemes used in these systems usually employ two cascading controllers, one external voltage controller and one internal current controller, to keep the voltage at the output terminals of the converter under control, and have several drawbacks. For example, they require a capacitor connected at the terminals as part of the output filter to allow the continuity of the current in the case of an isolated operation, since if this component were not present the current would be zero at all times and control of the converter could not be established by the cascading voltage and current controllers; and the loss of synchronism of the converter may result from the current limitation used, since if the reference active power is not equal to the real active power (due to the current limitation) in the synchronization loop, the control angle increases indefinitely and the converter loses synchronism.

US2021249862A1 discloses an electronic converter adapted for operating in GFM mode. The converter comprises a plurality of controllable switches; three-phase alternating current terminals connectable to an AC load and connected to a three-phase output of the converter; an output filter comprising at least one inductive impedance and connected to said terminals and to said output of the converter; detection means for detecting the instantaneous voltage and the instantaneous current at each terminal of the system; and a controller communicated with the converter and with the detection means and configured for generating control signals to control the state of the switches of said converter based on reference signals.

There are two further articles relevant: a first one by Rodriguez-Cabrero et al., titled "Synchronverter small-signal modelling and eigenvalue analysis for battery systems integration", published in the 2017 IEEE 6TH INTERNATIONAL CONFERENCE ON RENEWABLE ENERGY RESEARCH AND APPLICATIONS (ICRERA), IEEE, 5 November 2017 (2017-11-05), pages 780-784, XP033267162, accessible with DOI: 10.1109/ICRERA.2017.8191165; and a second one by Rordriguez-Amenedo et al., titled "Black-Start Capability of DFIG Wind Turbines Through a Grid-Forming Control Based on the Rotor Flux Orientation", published in the IEEE ACCESS, IEEE, USA, vol. 9, 15 October 2021 (2021-10-15), pages 142910-142924, XP011885409, accesible with DOI: 10.1109/ACCESS.2021 .3120478.

The first article discloses a power electronics converter emulating a synchronous machine whose control scheme comprises: a DC/AC converter connected to three-phase terminals through an inductive filter, voltage and current measurements, virtual shaft calculation based on active electrical power calculated from said voltage and current measurements with damping for speed and angle calculations, transformations into the d-q frame based on the resulting angle from the virtual shaft calculations for said voltage and current measurements, calculation of a virtual flux which has one single component and is merely used for controlling reactive power delivery, and generation of internal reference voltages from said single virtual flux component.

The second article discloses several things in common with the control described in the characterizing portion of claim 1, like DC/AC converter connected to three-phase terminals, voltage and current measurements, a synchronizing loop based on electrical torque calculated from said voltage and current measurements with damping for speed and angle calculations, transformations into the stationary frame $\alpha$-$\beta$ of voltages and currents, calculation of a virtual rotor flux, with two components using voltage and current measurements, transformations into the rotating frame d-q of the virtual flux components, generation of internal reference voltages from said d-q virtual flux components, and including transformation of said reference voltages from the d-q frame to the three-phase component frame.

DISCLOSURE OF THE INVENTION

The object of the invention is to provide a power conversion system, as defined in the claims.

The power conversion system comprises an electronic power converter with a plurality of controllable switches; three-phase alternating current terminals, one per phase, connectable to a power grid or to an isolated load and connected to a three-phase output of the converter; one output filter (per phase) comprising at least one inductive impedance and connected to said terminals and to said output of the converter; detection means for detecting the instantaneous current at each terminal of the system and the instantaneous voltage between each terminal of the system and a reference point, such as ground or a neutral point, for example; and a control unit communicated with the converter and with the detection means and configured for generating control signals to control the state of the switches of said converter.

The control unit comprises a control scheme with an estimation block configured for calculating the instantaneous active power and two stationary flux components of a virtual flux of the system, based on the measured instantaneous voltages and instantaneous currents, and for calculating the instantaneous active power based on the measured instantaneous voltages and instantaneous currents; a control block configured for transforming the stationary flux components of the virtual flux of the system into a direct rotating flux component and a quadrature rotating flux component of said virtual flux of the system considering a control angle; and a synchronization block configured for calculating the control angle based on at least a rated frequency preestablished for the measured instantaneous voltages of the system and on a calculated instantaneous active power of the system. The angle thus obtained allows the synchronism with the load (a power grid, for example) to which the terminals of the system are connected to be followed in a simpler manner, for example, and without the need to use a closed-loop phase follower, commonly known as PLL (phase-locked loop), which allows the delays this would entail to be avoided.

The control block is further configured for calculating a direct rotating voltage component and a quadrature rotating voltage component of an internal voltage of the system, based on the rotating flux components of the virtual flux of the system, and for calculating internal reference voltages of the system based on said rotating voltage components and on the control angle. Said internal reference voltages are used as inputs of the modulation block for generating said control signals, said internal reference voltages being the reference signals used for controlling the switches of the converter.

With this control scheme, a virtual flux decoupled from the instantaneous power is generated, which is used only to obtain the control angle, and it is the rotating components of this virtual flux that are used as system state variables to then obtain the reference signals for the converter (through internal system voltages). This decoupling makes it possible to obtain a stable system in which cascading controllers such as those described above, for example, are dispensed with.

Furthermore, since the reference signals are obtained based on the calculated internal voltages of the system, the system acts as a pure voltage source capable of following the changes at the terminals of the system, without delays and without other problems previously described (such as the need to incorporate a capacitor or the risk of a loss of synchronism). These and other advantages and features of the invention will become apparent in view of the figures and the detailed description of the invention.

DESCRIPTION OF THE DRAWINGS

Figure 1 schematically shows a power conversion system connected to an AC load and to a DC power source.
Figure 2 schematically shows a configuration of the controller of the system of Figure 1.
Figure 3 shows a configuration of an estimation block of the controller of Figure 2.
Figure 4 shows a configuration of a control block of the controller of Figure 2.
Figure 5 shows a configuration of a synchronization block of the controller of Figure 2.
Figure 6a shows a configuration of a reference block of the controller of the power conversion system.
Figure 6b shows another configuration of a reference block of the controller of the power conversion system.
Figure 6c shows another configuration of a reference block of the controller of the power conversion system.
Figure 7 shows a configuration of a reactive current limiter of the controller of Figure 2.
Figure 8 shows a configuration of a flux setting block of the controller of Figure 2.
Figure 9 shows a configuration of a power stabilizer of the controller of Figure 2.

DETAILED DISCLOSURE

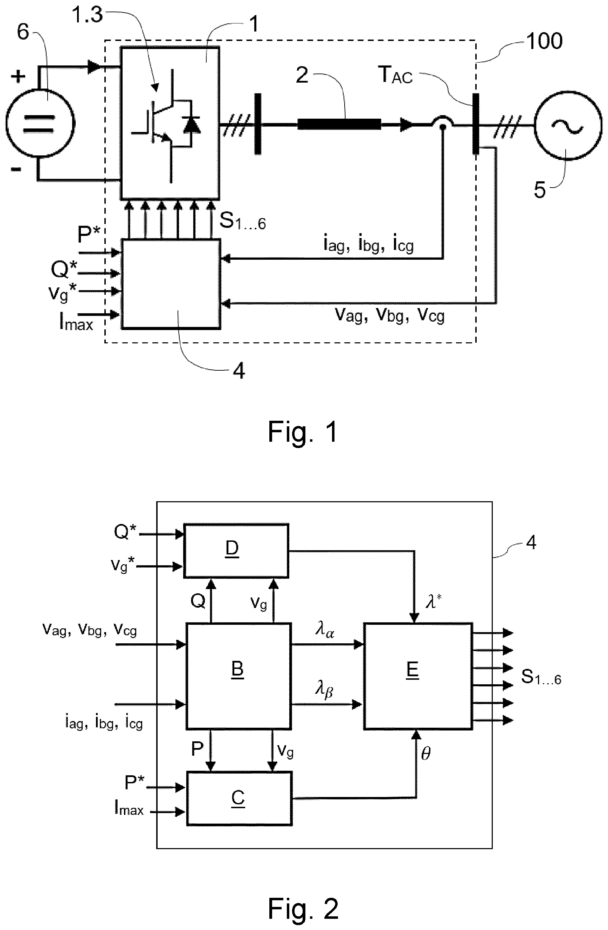

Figure 1 shows a simplified schematic of a power conversion system 100 comprising an electronic power converter 1 with a plurality of controllable switches 1.3 for, preferably, converting DC power to AC power. To that end, the converter 1 is preferably configured for being coupled between a DC power source 6 and an AC load 5, such as, for example, a power grid or an isolated load.

The system 100 further comprises:

- three-phase alternating current terminals $T_{AC}$, one per phase, connectable to the AC load 5 and connected to a three-phase output of the converter 1;
- an output filter 2 (per phase) comprising at least one inductive impedance $L_f$ (although it could be of another type if required, such as an LCL filter, for example), and connected to said terminals $T_{AC}$ and to said output of the converter 1;
- detection means (not depicted in the figures) for detecting the instantaneous voltage $v_{ag}$, $v_{bg}$, $v_{cg}$ and the instantaneous current $i_{ag}$, $i_{bg}$, $i_g$ at each terminal $T_{AC}$ of the system 100, which can be conventional means; and
- a control unit 4 communicated with the converter 1 and with the detection means and configured for generating control signals $S_{1...6}$ to control the state of the switches 1.3 of said converter 1, based on reference signals, thus controlling the DC to AC power conversion performed by said converter 1.

As depicted in Figure 2, the control unit 4 comprises a control scheme with a plurality of blocks, among which there are included at least one estimation block B, one control block E, and one synchronization block C.

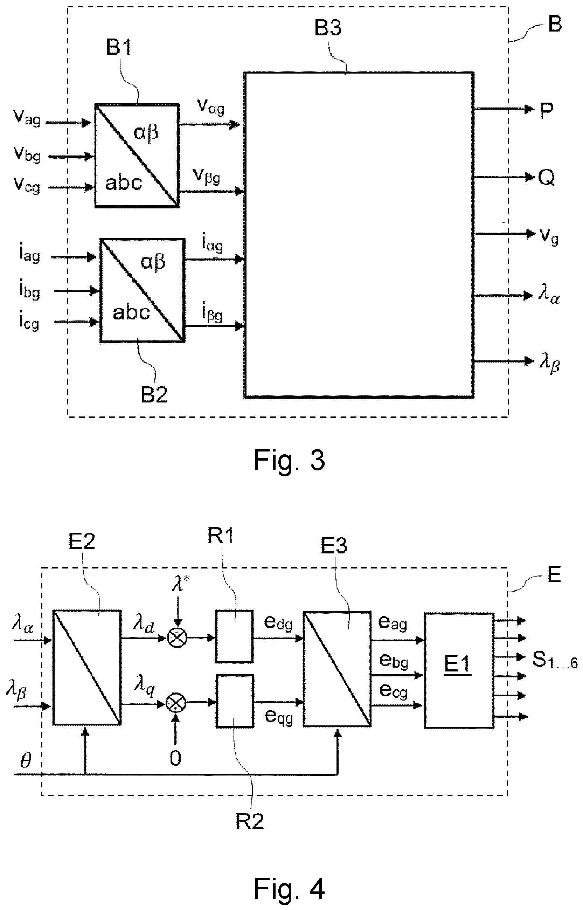

Estimation block B, depicted by way of example in Figure 3, is configured for calculating two stationary flux components $\lambda_\alpha$ and $\lambda_\beta$ corresponding to a stationary reference frame, of a virtual flux of the system 100, based on the measured instantaneous voltages $v_{ag}$, $v_{bg}$ and $v_{cg}$ and instantaneous currents $i_{ag}$, $i_{bg}$, and $i_{cg}$, and for calculating the instantaneous active power P based on the measured instantaneous voltages $v_{ag}$, $v_{bg}$, and $v_{cg}$ and instantaneous currents $i_{ag}$, $i_{bg}$ and $i_{cg}$. To that end, the estimation block B comprises a first estimation sub-block B1 configured for transforming the instantaneous voltages $v_{ag}$, $v_{bg}$, and $v_{cg}$ into two voltage components $v_{\alpha g}$ and $v_{\beta g}$ of a stationary reference frame (preferably by means of a Clarke transformation); a second estimation sub-block B2 for transforming the instantaneous currents $i_{ag}$, $i_{bg}$, and $i_{cg}$ into two current components $i_{\alpha g}$ and $i_{\beta g}$ of a stationary reference frame (preferably by means of a Clarke transformation); and a third estimation sub-block B3 receiving the voltage components $v_{\alpha g}$ and $v_{\beta g}$ and the current components $i_{\alpha g}$ and $i_{\beta g}$ as inputs, and configured for calculating at least the instantaneous active power P of the conversion system 100, the voltage modulus $v_g$ of said system 100, and the stationary flux components $\lambda_\alpha$ and $\lambda_\beta$ of the virtual flux according to the following equations:

$$P = \frac{3}{2}\left(v_{\alpha g}i_{\alpha g} + v_{\beta g}i_{\beta g}\right), \tag{1}$$

$$v_g = \sqrt{v_{\alpha g}^2 + v_{\beta g}^2}, \qquad (2)$$

$$\lambda_\alpha = L_f i_{\alpha g} + \int v_{\alpha g}\, dt\,, \qquad (3)$$

$$\lambda_\beta = L_f i_{\beta g} + \int v_{\beta g}\, dt\,. \qquad (4)$$

Preferably, the third estimation sub-block B3 can further be configured for calculating the instantaneous reactive power Q of the conversion system 100, preferably based on the following equation:

$$Q = \frac{3}{2}\left(v_{\beta g} i_{\alpha g} - v_{\alpha g} i_{\beta g}\right). \qquad (5)$$

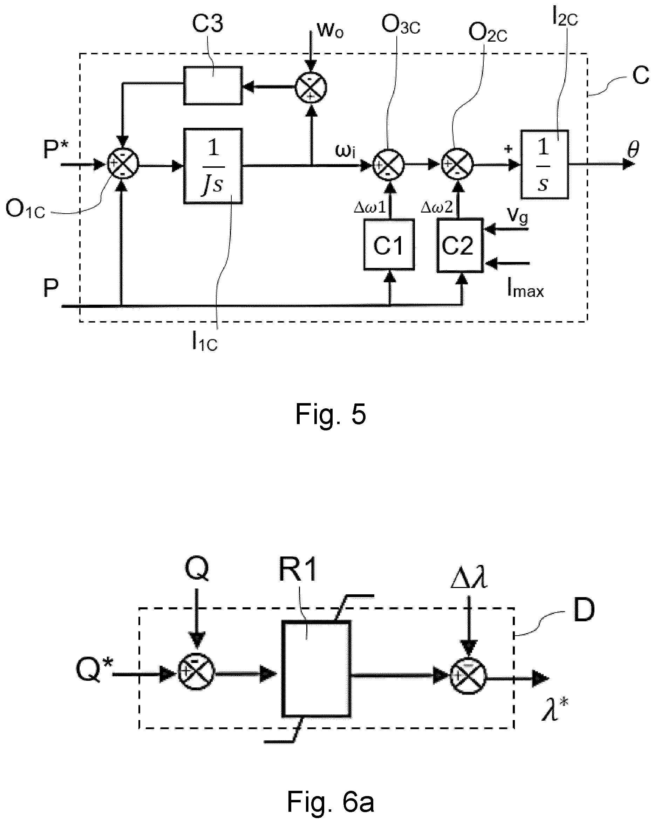

Control block E, depicted by way of example in Figure 4, receives as inputs the stationary flux components $\lambda_\alpha$ and $\lambda_\beta$ of the virtual flux of the system 100 calculated in estimation block B and is configured for transforming said stationary flux components $\lambda_\alpha$ and $\lambda_\beta$ into a rotating reference frame, transforming said stationary flux components $\lambda_\alpha$ and $\lambda_\beta$ into a direct rotating flux component $\lambda_d$ and a quadrature rotating flux component $\lambda_q$, considering to that end a control angle $\theta$. The control angle $\theta$ is calculated in synchronization block C, depicted by way of example in Figure 5, based on at least the instantaneous active power P calculated in estimation block B and on a rated frequency $w_o$ preestablished for the instantaneous voltages $v_{ag}$, $v_{bg}$, and $v_{cg}$ of the terminals $T_{AC}$ of the system 100, such that said control angle $\theta$ is what allows the synchronism of the system 100 with the AC load 5 to be maintained. The rated frequency $w_o$ will preferably be 50 Hz, but it does not necessarily have to be (it will depend on the AC load 5 to which the system 100 is connected).

As shown in Figure 4, control block E is further configured for calculating a direct rotating voltage component $e_{dg}$ and a quadrature rotating voltage component $e_{qg}$ of an internal voltage of the system 100 based on the rotating flux components $\lambda_\alpha$ and $\lambda_\beta$ of the virtual flux of the system 100, said rotating voltage components $e_{dg}$ and $e_{qg}$ being referenced with the control angle $\theta$. Control block E is further configured for calculating reference instantaneous internal voltages $e_{ag}$, $e_{bg}$, and $e_{cg}$ of the system 100 based on said rotating voltage components $e_{dg}$ and $e_{qg}$, preferably by means of an inverse Clarke transformation, and using the control angle $\theta$ as a reference. Said reference instantaneous internal voltages $e_{ag}$, $e_{bg}$, and $e_{cg}$ of the system 100 are used for generating the control signals $S_{1...6}$, said reference instantaneous internal voltages $e_{ag}$, $e_{bg}$, and $e_{cg}$ thus being the reference signals. Therefore, as described above, the rotating components of the virtual flux can be used as state variables of the system 100, with the described advantages.

For generating the control signals $S_{1...6}$, control block E comprises a generation block E1 in which the desired modulation technique is used to obtain the control signals $S_{1...6}$, said reference instantaneous internal voltages $e_{ag}$, $e_{bg}$, and $e_{cg}$ thus being modulation techniques known as PWM (Pulse-Width Modulation) or SHE (Selective Harmonic Elimination), to name two examples.

Therefore, control block E can comprise generation block E1; an axis rotation block E2 from a stationary reference system, of components $\alpha\beta$, to a rotating reference frame, of components dq, which allows the calculation of the rotating components $\lambda_d$ and $\lambda_q$ of the virtual flux based on the stationary components $\lambda_d$ and $\lambda_q$ of said virtual flux and on the control angle $\theta$; and a block E3 corresponding to the inverse Park transformation for transforming the rotating voltage components $e_{dg}$ and $e_{qg}$ into the reference instantaneous internal voltages $e_{ag}$, $e_{bg}$, $e_{cg}$, by means of the control angle $\theta$.

Preferably, the control block further comprises a first controller R1, preferably a proportional integral controller, receiving the difference between a calculated virtual flux modulus $\lambda^*$ and the direct rotating flux component $\lambda_d$, with its output being the direct rotating voltage component $e_{dg}$ of the internal voltage of the converter 1; and a second controller R2, preferably a proportional integral controller, receiving the difference between zero and the quadrature rotating flux component $\lambda_q$, with its output being the quadrature rotating voltage component $e_{qg}$ of the internal voltage of the converter 1.

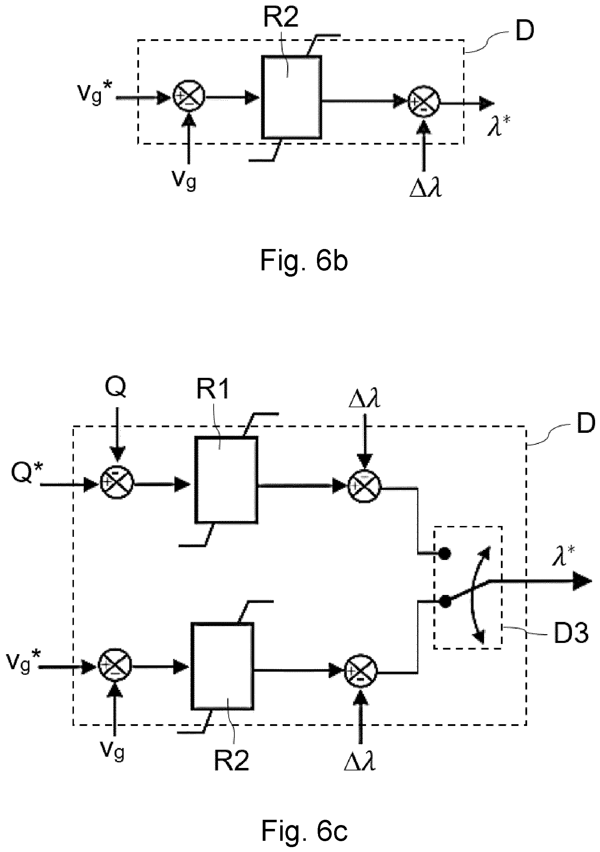

The control unit 4 can further comprise a reference block D configured for calculating the virtual flux modulus $\lambda^*$ which can be used in control block E (see the preceding paragraph), and said reference block D is configured for calculating said virtual flux modulus $\lambda^*$ based on a reference reactive power $Q^*$ (Figure 6a) or on a reference instantaneous voltage modulus $v_g^*$ (Figure 6b). Alternatively, reference block D can be configured for said virtual flux modulus $\lambda^*$ both based on the reference reactive power $Q^*$ and on the reference instantaneous voltage modulus $v_g^*$, as depicted in Figure 6c, where either may be selected by means of a selector D3. These reference values can be pre-determined by the operator of the facility where the system 100 is incorporated, for example.

When the virtual flux modulus $\lambda^*$ is calculated based on the reference reactive power $Q^*$, first the difference between said reference reactive power Q* and the reactive power Q calculated in the third estimation sub-block B3 is calculated, and the result is the input of a controller R1 (preferably a proportional integral controller), said virtual flux modulus $\lambda$* being the output of said controller R1. When said virtual flux modulus $\lambda$* is calculated based on the reference instantaneous voltage modulus $v_g$*, first the difference between said reference instantaneous voltage modulus $v_g$* and the voltage modulus $v_g$ calculated in said third estimation sub-block B3 is calculated, and the result is the input of a controller R2 (preferably a proportional integral controller), said virtual flux modulus $\lambda$* being the output of said controller R2.

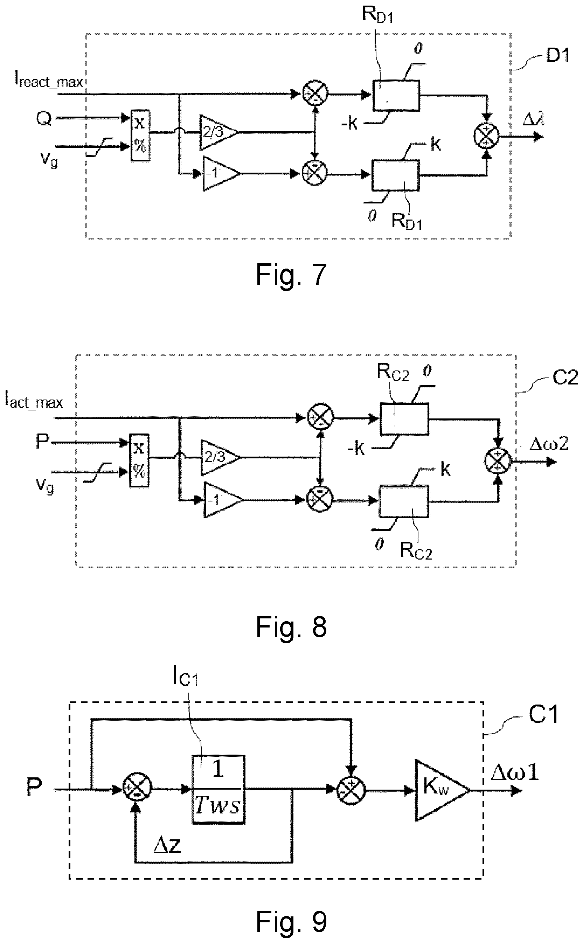

To prevent to a greater extent a possible system 100 instability, furthermore, a flux setting value $\Delta\lambda$ for the virtual flux modulus $\lambda$* is considered when calculating said virtual flux modulus $\lambda$*, the control unit 4 in reference block D comprising to that end, for example, a reactive current limiter D1 such as the one depicted in Figure 7 for example. Said flux setting value $\Delta\lambda$ is obtained based on the measured reactive power Q and on a maximum reactive current value $I_{react\_max}$ preestablished for an internal reactive current $I_{react}$ of the system 100, the internal reactive current $I_{react}$ being obtained based on the measured active power Q and on the voltage modulus $v_g$ calculated in estimation block B, according to the following equation:

$$I_{react} = \frac{2}{3}\left(\frac{Q}{v_g}\right) \tag{6}$$

In the reactive current limiter D1, the reactive current $I_{react}$ with the preestablished maximum reactive current value $I_{react\_max}$, both positive and negative, is subtracted, and the result of each operation is used as input for a respective controller $R_{D1}$ (preferably a proportional integral controller), the sum between the outputs of both controllers $R_{D1}$ being the flux setting value $\Delta\lambda$. Said flux setting value $\Delta\lambda$ is subtracted from the output of the corresponding controller R1 and/or R2, the result of said subtraction being the virtual flux modulus $\lambda$*.

As described above, the control angle $\theta$ is calculated in synchronization block C. Synchronization block C comprises a first operator $O_{1C}$ configured for calculating the difference between the measured active power P and a reference active power P* (which can be pre-determined by the operator of the facility where the system 100 is incorporated, for example); a first integrator $I_{1C}$, with a pre-determined inertia constant J, the input of which is the output of the first operator $O_{1C}$ and the output of which is an internal frequency $\omega_i$ of the system 100; and a second integrator $I_{2C}$ configured for integrating said internal frequency $\omega_i$ and yielding the control angle $\theta$ as a result. Furthermore, the difference between the rated frequency $w_o$ and the internal frequency $\omega_i$ is calculated, and the result is multiplied by a damping constant C3, subtracting said result from the reference active power P*, such that the result of subtracting both active power P and said damping constant C3 from the reference active power P* is taken to the input of the first integrator $I_{1C}$. Therefore, by taking into account the damping constant C3 and the inertia constant J, as required, the control angle $\theta$ is determined by emulating the behavior of a synchronous generator, with the advantages that this entails and as has been described above.

The control unit 4 further comprises an active current limiter C2 (in synchronization block C, for example), which can be like the one depicted in Figure 8, and is used for setting the value of the internal frequency $\omega_i$ so that the system 100 does not become unstable due to internal currents (in this case due to an internal active current $I_{act}$), generating to that end an active setting value $\Delta\omega_2$. The active current limiter C2 is configured for obtaining the active setting value $\Delta\omega_2$ based on a maximum active current value $I_{act\_max}$ preestablished for an internal active current $I_{act}$ of the system 100, obtaining the internal active current $I_{act}$ based on the measured active power P and the voltage modulus $v_g$ calculated in estimation block B, according to the following equation:

$$I_{act} = \frac{2}{3}\left(\frac{P}{v_g}\right) \tag{7}$$

In the active current limiter C2, the active current $I_{act}$ with the preestablished maximum active current value $I_{act\_max}$, both positive and negative, is subtracted, and the result of each operation is used as input for a respective controller $R_{C2}$ (preferably a proportional integral controller), the sum between the outputs of both controllers $R_{C2}$ being the active setting value $\Delta\omega_2$. Said active setting value $\Delta\omega_2$ is subtracted from the internal frequency $\omega_i$. The active current limiter D2 results in preventing, due to the active current, the control angle $\theta$ from becoming uncontrolled by preventing the system 100 from becoming unstable, at least for this reason.

Converters have maximum physical limits for currents that the elements forming same can withstand. In converter 1, the maximum values $I_{act\_max}$ and $I_{react\_max}$ are determined based on said physical limits, such that the maximum total current does not exceed the values that can be withstood by said elements. Each maximum value $I_{act\_max}$ and $I_{react\_max}$ can be pre-determined or can be dynamically set during operation of the system 100, as required in each case.

The control unit 4 further comprises a power stabilizer C1 (in synchronization block C, for example), which can be like the one depicted in Figure 9, and is also used for setting the value of the internal frequency $\omega_i$, in this case so that the system 100 does not become unstable due to the active power P of the system 100, generating to that end a power setting value $\Delta\omega_1$. The power stabilizer C1 is configured for obtaining the power setting value $\Delta\omega_1$ based on the measured active power P, and said power setting value $\Delta\omega_1$ is subtracted directly from the internal frequency $\omega_i$ (as depicted in Figure 5), or from the result of the difference between the active setting value $\Delta\omega_2$ and said internal frequency $\omega_i$. The power stabilizer C1 is configured for calculating the difference between the active power P and an auxiliary signal $\Delta z$ and for using said difference as input for an integrator $I_{C1}$ of said power stabilizer C1, with a specific integration constant $T_w$, the output of the integrator Ic, being the auxiliary signal $\Delta z$, and for subtracting said auxiliary signal $\Delta z$ from the active power P, the result of said subtraction being the power setting value $\Delta\omega_1$.

The control unit 4 is a device with computational capacity, such as, for example, a microcontroller, a controller, a microprocessor, a processor, or an FPGA.

**Claims**

1.    Power conversion system comprising an electronic power converter (1) with a plurality of controllable switches (1.3); three-phase alternating current terminals ($T_{AC}$) connectable to an AC load (5) and connected to a three-phase output of the converter (1); an output filter (2) comprising at least one inductive impedance ($L_f$) and connected between said terminals ($T_{AC}$) and said output of the converter (1); detection means for detecting the instantaneous voltage ($v_{ag}$, $v_{bg}$, $v_{cg}$) and the instantaneous current ($i_{ag}$, $i_{bg}$, $i_{cg}$) at each terminal ($T_{AC}$) of the system (100); and a control unit (4) communicated with the converter (1) and with the detection means, and configured for generating control signals ($S_{1...6}$) to control the state of the switches (1.3) of said converter (1) based on reference signals, **characterized in that** the control unit (4) comprises a control scheme with an estimation block (B) configured for calculating the instantaneous active power (P) and two stationary flux components ($\lambda_\alpha$,$\lambda_\beta$) of a virtual flux of the system (100), based on the measured instantaneous voltages ($v_{ag}$, $v_{bg}$, $v_{cg}$) and instantaneous currents ($i_{ag}$, $i_{bg}$, $i_{cg}$); a control block (E) configured for transforming said stationary flux components ($\lambda_\alpha$,$\lambda_\beta$) into a direct rotating flux component ($\lambda_d$) and a quadrature rotating flux component ($\lambda_q$), considering a control angle ($\theta$); and a synchronization block (C) configured for calculating the control angle ($\theta$) based on at least a preestablished rated frequency ($w_o$) for the measured instantaneous voltages ($v_{ag}$, $v_{bg}$, $v_{cg}$) and on the calculated active power (P), the control block (E) further being configured for calculating a direct rotating voltage component ($e_{dg}$) and a quadrature rotating voltage component ($e_{qg}$) of an internal voltage of the system (100), based on the rotating flux components ($\lambda_d$,$\lambda_q$), and for calculating reference instantaneous internal voltages ($e_{ag}$, $e_{bg}$, $e_{cg}$) of the system (100) based on said rotating voltage components ($e_{dg}$, $e_{qg}$) and on the control angle ($\theta$), said reference instantaneous internal voltages ($e_{ag}$, $e_{bg}$, $e_{cg}$) being the reference signals for generating the control signals ($S_{1...6}$), the synchronization block (C) comprising a first operator ($O_{1C}$) configured for calculating the difference between the measured active power (P) and a reference active power (P*); a first integrator ($I_{1C}$), with a pre-determined inertia constant (J), the input of which is the output of the first operator ($O_{1C}$) and the output of which is an internal frequency ($\omega_i$) of the system (100); and a second integrator ($I_{2C}$) configured for integrating said internal frequency ($\omega_i$) and yielding the control angle ($\theta$) as a result, said synchronization block (C) being also configured for calculating a difference between the rated frequency ($w_o$) and the internal frequency ($\omega_i$), for multiplying the resulting difference with a damping constant (C3), and for subtracting the result of said multiplication, together with the active power (P), from the reactive power (P*), the total result of said subtraction being the input of the first integrator ($I_{1C}$).

2.    Power conversion system according to claim 1, wherein the control unit (4) comprises a reference block (D) configured for calculating a virtual flux modulus ($\lambda$*) based on a reference reactive power (Q*) or on a reference instantaneous voltage modulus ($v_g$*), the control block (E) further being configured for calculating the difference between the virtual flux modulus ($\lambda$*) and the direct rotating flux component ($\lambda_d$), and said control block (E) comprising a first controller (R1), preferably a proportional integral controller, the input of which is said difference and the output of which is the direct rotating voltage component ($e_{dg}$) of the internal voltage of the system (100), and a second controller (R2), preferably a proportional integral controller, the input of which is the direct rotating flux component ($\lambda_d$) and the output of which is the quadrature rotating voltage component ($e_{qg}$) of said internal voltage of the system (100).

3.    Power conversion system according to claim 2, wherein the estimation block (B) is configured for calculating a voltage modulus ($v_g$) based on the measured instantaneous voltages ($v_{ag}$, $v_{bg}$, $v_{cg}$), the reference block (D) being configured for calculating the virtual flux modulus ($\lambda$*) based on a reference signal coming from the difference between a reference reactive power (Q*) and the calculated reactive power (Q), and/or from the difference between a reference instantaneous voltage modulus ($v_g$*) and the voltage modulus ($v_g$).

**4.** Power conversion system according to claim 3, wherein the reference block (D) is configured for calculating the virtual flux modulus ($\lambda *$) as the result of the difference between the reference signal and a flux setting value ($\Delta\lambda$) for the virtual flux modulus ($\lambda^*$), the control unit (4) comprising a reactive current limiter (D1) for obtaining said flux setting value ($\Delta\lambda$), said reactive current limiter (D1) being configured for obtaining said flux setting value ($\Delta\lambda$) based on the calculated reactive power (Q) and on a maximum reactive current value ($I_{react\_max}$) preestablished for an internal reactive current ($I_{react}$) of the system (100) and for obtaining the internal reactive current ($I_{react}$) based on the calculated reactive power (Q) and the voltage modulus ($v_g$) calculated in the estimation block (B) according to

$$I_{react} = \frac{2}{3}\left(\frac{Q}{v_g}\right)$$

the equation, wherein $I_{react}$ is the internal reactive current, Q is the reactive power and $v_g$ is the voltage modulus.

**5.** Power conversion system according to claim 4, wherein the reactive current limiter (D1) is configured for calculating a difference between the reactive current ($I_{react}$) and the preestablished maximum reactive current value ($I_{react\_max}$), both positive and negative, for controlling the result by means of a respective controller ($R_{D1}$), and for adding the output of both controllers ($R_{D1}$) together, the result of said sum being the flux setting value ($\Delta\lambda$).

**6.** Power conversion system according to any of claims 3 to 5, wherein the estimation block (B) comprises a first estimation sub-block (B1) configured for transforming the instantaneous voltages ($v_{ag}$, $v_{bg}$, $v_{cg}$) into two voltage components ($v_{\alpha g}$, $v_{\beta g}$) of a stationary reference frame, a second estimation sub-block (B2) for transforming the instantaneous currents ($i_{ag}$, $i_{bg}$, $i_{cg}$) into two current components ($i_{\alpha g}$, $i_{\beta g}$) of a stationary reference frame; and a third estimation sub-block (B3) for calculating at least the instantaneous active power (P), a voltage modulus ($v_g$), and the stationary flux components ($\lambda_\alpha, \lambda_\beta$) of the virtual flux according to the equations

$$P = \frac{3}{2}\left(v_{\alpha g} i_{\alpha g} + v_{\beta g} i_{\beta g}\right),$$

$$v_g = \sqrt{v_{\alpha g}^2 + v_{\beta g}^2},$$

$$\lambda_\alpha = L_f i_{\alpha g} + \int v_{\alpha g}\, dt,$$

$$\lambda_\beta = L_f i_{\beta g} + \int v_{\beta g}\, dt,$$

wherein $i_{\alpha g}$ and $i_{\beta g}$ are the two current components of the stationary reference frame, $v_{\alpha g}$ and $v_{\beta g}$ are the two voltage components of the stationary reference frame, P is the active power, $v_g$ is a voltage modulus of the two voltage components of the stationary reference frame and $\lambda_\alpha$ and $\lambda_\beta$ are the stationary flux components of the virtual flux, the estimation block (B) being configured for calculating the instantaneous reactive power (Q) according to the equation

$$Q = \frac{3}{2}\left(v_{\beta g} i_{\alpha g} - v_{\alpha g} i_{\beta g}\right),$$

wherein Q is the reactive power.

**7.** Power conversion system according to any of claims 1 to 6, wherein the synchronization block (C) further comprises an active current limiter (C2) for obtaining an active setting value ($\Delta\omega_2$) for the internal frequency ($\omega_i$) and said synchronization block (C) is configured for subtracting said active setting value ($\Delta\omega_2$) from said internal frequency ($\omega_i$), the result of said subtraction being the input of the second integrator ($I_{2C}$) of said synchronization block (C), the active current limiter (C2) being configured for obtaining said active setting value ($\Delta\omega_2$) based on the calculated active power (P) and on a maximum active current value ($I_{act\_max}$) preestablished for an internal active current ($I_{act}$) of the system (100) and for obtaining the internal active current ($I_{act}$) based on the calculated active power (P) and on the voltage modulus ($v_g$) according to the equation $$I_{act} = \frac{2}{3}\left(\frac{P}{v_g}\right)$$ , wherein $I_{act}$ is the internal active current, P is the active power and $v_g$ is the voltage modulus.

8. Power conversion system according to claim 7, wherein the active current limiter (C2) is configured for calculating a difference between the active current ($I_{act}$) and the preestablished maximum active current value ($I_{act\_max}$), both positive and negative, for controlling the result by means of a respective controller ($R_{C2}$), and for adding the output of both controllers ($R_{C2}$) to one another, the result of said sum being the active setting value ($\Delta\omega_2$).

9. Power conversion system according to any of claims 6 to 8, wherein the synchronization block (C) further comprises a power stabilizer (C1) configured for obtaining a power setting value ($\Delta\omega_1$), and said synchronization block (C) is configured for subtracting said active setting value ($\Delta\omega_2$) from said internal frequency ($\omega_i$), the result of said subtraction being the input of the second integrator ($I_{2C}$) of said synchronization block (C), the power stabilizer (C1) being configured for calculating the difference between the active power (P) and an auxiliary signal ($\Delta z$), for using said difference as input for an integrator ($I_{C1}$) of said power stabilizer (C1), with an specific integration constant ($T_w$), the output of the integrator ($I_{C1}$) being the auxiliary signal ($\Delta z$), and for subtracting said auxiliary signal ($\Delta z$) from the active power (P), the result of said subtraction being the power setting value ($\Delta\omega_1$).

10. Power conversion system according to any of claims 1 to 5, wherein the estimation block (B) comprises a first estimation sub-block (B1) configured for transforming the instantaneous voltages ($v_{ag}$, $v_{bg}$, $v_{cg}$) into two voltage components ($v_{\alpha g}$, $v_{\beta g}$) of a stationary reference frame, a second estimation sub-block (B2) for transforming the instantaneous currents ($i_{ag}$, $i_{bg}$, $i_{cg}$) into two current components ($i_{\alpha g}$, $i_{\beta g}$) of a stationary reference frame; and a third estimation sub-block (B3) for calculating at least the instantaneous active power (P), the instantaneous reactive power (Q), a voltage modulus ($v_g$), and the stationary flow components ($\lambda_\alpha,\lambda_\beta$) of the virtual flow according to the equations

$$P = \frac{3}{2}\left(v_{\alpha g} i_{\alpha g} + v_{\beta g} i_{\beta g}\right),$$

$$Q = \frac{3}{2}\left(v_{\beta g} i_{\alpha g} - v_{\alpha g} i_{\beta g}\right),$$

$$v_g = \sqrt{v_{\alpha g}^2 + v_{\beta g}^2},$$

$$\lambda_\alpha = L_f i_{\alpha g} + \int v_{\alpha g}\, dt,$$

$$\lambda_\beta = L_f i_{\beta g} + \int v_{\beta g}\, dt,$$

wherein $i_{\alpha g}$ and $i_{\beta g}$ are the two current components of the stationary reference frame, $v_{\alpha g}$ and $v_{\beta g}$ are the two voltage components of the stationary reference frame, P is the active power, Q is the reactive power, $v_g$ is a voltage modulus of the two voltage components of the stationary reference frame and $\lambda_\alpha$ and $\lambda_\beta$ are the stationary flux components of the virtual flux.

**Patentansprüche**

1. Leistungswandlungssystem umfassend einen elektronischen Leistungswandler (1) mit einer Vielzahl von steuerbaren Schaltern (1.3); dreiphasige Wechselstromklemmen ($T_{AC}$), welche an einer Wechselstrombelastung (5) anschließbar sind und an einem dreiphasigen Ausgang des Wandlers (1) angeschlossen sind; einen Ausgangsfilter (2), welcher mindestens eine induktive Impedanz ($L_f$) umfasst und zwischen den genannten Klemmen ($T_{AC}$) und dem genannten Ausgang des Wandlers (1) angeschlossen ist; Erfassungsmittel zum Erfassen der Momentanspannung ($v_{ag}$, $v_{bg}$, $v_{cg}$) und des Momentanströme ($i_{ag}$, $i_{bg}$, $i_{cg}$) an jeder Klemme ($T_{AC}$) des Systems (100); und eine Steuereinheit (4), welche mit dem Wandler (1) und mit den Erfassungsmitteln kommuniziert und dazu ausgebildet ist, Steuersignale ($S_{1...6}$) zu erzeugen, um den Zustand der Schalter (1.3) des genannten Wandlers (1) basierend auf Bezugssignalen zu steuern, **dadurch gekennzeichnet, dass** die Steuereinheit (4) ein Steuerschema mit einem Schätzungsblock (B) ausgebildet zum Berechnen der momentanen Wirkleistung (P) und zweier stationäre Flusskomponenten ($\lambda_\alpha$, $\lambda_\beta$) eines virtuellen Flusses des Systems (100), basierend auf die gemessenen Momentanspannungen ($v_{ag}$, $v_{bg}$, $v_{cg}$) und Momentanströme ($i_{ag}$, $i_{bg}$, $i_{cg}$); ein Steuerblock (E) ausgebildet zum Umwandeln der genannten stationären Flusskomponenten ($\lambda_\alpha$, $\lambda_\beta$) in eine direkte Rotationsflusskomponente ($\lambda_d$) und eine Quadratur-Rotationsflusskomponente ($\lambda_q$) unter Berücksichtigung eines Steuerwinkels ($\theta$); und ein Synchronisationsblock (C) ausgebildet zum Berechnen des Steuerwinkels ($\theta$) basierend auf mindestens einer vorbestimmten Nennfrequenz ($w_o$) für die gemessenen Momentanspannungen ($v_{ag}$, $v_{bg}$, $v_{cg}$) und auf der berechneten Wirkleistung (P) umfasst, wobei das Steuerblock (E) zusätzliche dazu ausgebildet ist, eine direkte Rotationsspannungskomponente ($e_{dg}$) und eine Quadratur-Rotationsspannungskomponente ($e_{qg}$) einer inneren Spannung des Systems (100), basierend auf den Rotationsflusskomponenten ($\lambda_d$, $\lambda_q$), zu berechnen, und innere Bezugsmomentanspannungen ($e_{ag}$, $e_{bg}$, $e_{cg}$) des Systems (100) basierend auf den genannten Rotationsspannungskomponenten ($e_{dg}$, $e_{qg}$) und auf dem Steuerwinkel ($\theta$) zu berechnen, wobei die genannten inneren Bezugsmomentanspannungen ($e_{ag}$, $e_{bg}$, $e_{cg}$) die Bezugssignale zum Erzeugen der Steuersignale ($S_{1...6}$) sind, wobei das Synchronisationsblock (C) einen ersten Operator ($O_{1C}$) ausgebildet zum Berechnen des Unterschieds zwischen der gemessenen Wirkleistung (P) und einer Bezugswirkspannung (P*); einen ersten Integrator ($I_{1C}$) mit einer vorbestimmten Trägheitskonstante (J), deren Eingang der Ausgang des ersten Operators ($O_{1C}$) ist und deren Ausgang eine innere Frequenz ($\omega_i$) des Systems (100) ist; und einen zweiten Integrator ($I_{2C}$) ausgebildet zum Integrieren der genannten inneren Frequenz ($\omega_i$) und zum Ergeben des Steuerwinkels ($\theta$) als Ergebnis umfasst, wobei das genannte Synchronisationsblock (C) auch dazu ausgebildet ist, einen Unterschied zwischen der Nennfrequenz ($w_o$) und der inneren Frequenz ($\omega_i$) zu berechnen, den resultierenden Unterschied mit einer Dämpfungskonstante (C3) zu multiplizieren und dass Ergebnis der genannten Multiplikation, zusammen mit der Wirkspannung (P), von der Blindleistung (P*) zu subtrahieren, wobei das Gesamtergebnis der genannten Subtraktion der Eingang des ersten Integrators ($I_{1C}$) ist.

2. Leistungswandlungssystem nach Anspruch 1, wobei die Steuereinheit (4) ein Bezugsblock (D) ausgebildet zum Berechnen eines virtuellen Flussmoduls ($\lambda^*$) basierend auf einer Bezugsblindleistung (Q*) oder auf einem Bezugsmomentanspannungsmodul ($v_g^*$) umfasst, wobei das Steuerblock (E) zusätzlich dazu ausgebildet ist, den Unterschied zwischen dem virtuellen Flussmodul ($\lambda^*$) und der direkten Rotationsflusskomponente ($\lambda_d$) zu berechnen, und wobei das genannte Steuerblock (E) eine erste Steuerung (R1), vorzugsweise eine proportionale Integralsteuerung, deren Eingang der genannte Unterschied ist und deren Ausgang die direkte Rotationsspannungskomponente ($e_{dg}$) der inneren Spannung des Systems (100) ist, und eine zweite Steuerung (R2), vorzugsweise eine proportionale Integralsteuerung, deren Eingang die direkte Rotationsflusskomponente ($\lambda_d$) ist und deren Ausgang die Quadratur-Rotationsspannungskomponente ($e_{qg}$) der genannten inneren Spannung des Systems (100) ist, umfasst.

3. Leistungswandlungssystem nach Anspruch 2, wobei das Schätzungsblock (B) dazu ausgebildet ist, ein Spannungsmodul ($v_g$) basierend auf den gemessenen Momentanspannungen ($v_{ag}$, $v_{bg}$, $v_{cg}$) zu berechnen, wobei das Bezugsblock (D) dazu ausgebildet ist, das virtuelle Flussmodul ($\lambda^*$) basierend auf einem Bezugssignal stammend vom Unterschied zwischen einer Bezugsblindspannung (Q*) und der berechneten Blindspannung (Q) und/oder vom Unterschied zwischen einem Bezugsmomentanspannungsmodul ($v_g^*$) und dem Spannungsmodul ($v_g$) zu berechnen.

4. Leistungswandlungssystem nach Anspruch 3, wobei das Bezugsblock (D) dazu ausgebildet ist, das virtuelle Flussmodul ($\lambda^*$) als Ergebnis des Unterschieds zwischen dem Bezugssignal und einem Flusseinstellwert ($\Delta\lambda$) für das virtuelle Flussmodul ($\lambda^*$) zu berechnen, wobei die Steuereinheit (4) einen Blindstrombegrenzer (D1) zum Erhalten des genannten Flusseinstellwertes ($\Delta\lambda$) umfasst, wobei der genannte Blindstrombegrenzer (D1) dazu ausgebildet ist, den genannten Flusseinstellwert ($\Delta\lambda$) basierend auf der berechneten Blindleistung (Q) und auf einem maximalen Blindstromwert ($I_{react\_max}$) vorbestimmt für einen inneren Blindstrom ($I_{react}$) des Systems (100) zu erhalten und den inneren Blindstrom ($I_{react}$) basierend auf der berechneten Blindleistung (Q) und dem Spannungsmodul ($v_g$), welcher im Schätzungsblock (B) gemäß der Gleichung $I_{react} = \frac{2}{3}\left(\frac{Q}{v_g}\right)$ berechnet wird, zu erhalten, wobei $I_{react}$ der innere Blindstrom ist, Q die Blindleistung ist und $v_g$ das Spannungsmodul ist.

5. Leistungswandlungssystem nach Anspruch 4, wobei der Blindstrombegrenzer (D1) dazu ausgebildet ist, einen Unterschied zwischen dem Blindstrom ($I_{react}$) und dem vorbestimmten maximalen Blindstromwert ($I_{react\_max}$), beide positiv und negativ, zu berechnen, das Ergebnis mittels einer jeweiligen Steuerung ($R_{D1}$) zu steuern und den Ausgang beider Steuerungen ($R_{D1}$) zusammenzurechnen, wobei das Ergebnis dieser Summe der Flusseinstellwert ($\Delta\lambda$) ist.

6. Leistungswandlungssystem nach einem der Ansprüche 3 bis 5, wobei das Schätzungsblock (B) ein erstes Schätzungsteilblock (B1) ausgebildet zum Umwandeln der Momentanspannungen ($v_{ag}$, $v_{bg}$, $v_{cg}$) in zwei Spannungskomponenten ($v_{\alpha g}$, $v_{\beta g}$) eines stationären Bezugsrahmens, ein zweites Schätzungsteilblock (B2) zum Umwandeln der Momentanströme ($i_{ag}$, $i_{bg}$, $i_{cg}$) in zwei Stromkomponenten ($i_{\alpha g}$, $i_{\beta g}$) eines stationären Bezugsrahmens; und ein drittes Schätzungsteilblock (B3) zum Berechnen mindestens der momentanen Wirkleistung (P), eines Spannungsmoduls ($v_g$) und der stationären Flusskomponenten ($\lambda_\alpha$, $\lambda_\beta$) des virtuellen Flusses gemäß den Gleichungen

$$P = \frac{3}{2}\left(v_{\alpha g} i_{\alpha g} + v_{\beta g} i_{\beta g}\right),$$

$$v_g = \sqrt{v_{\alpha g}^2 + v_{\beta g}^2},$$

$$\lambda_\alpha = L_f i_{\alpha g} + \int v_{\alpha g}\, dt\,,$$

$$\lambda_\beta = L_f i_{\beta g} + \int v_{\beta g}\, dt\,,$$

umfasst, wobei $i_{\alpha g}$ und $i_{\beta g}$ zwei Stromkomponenten des stationären Bezugsrahmen sind, $v_{\alpha g}$ und $v_{\beta g}$ die zwei Spannungskomponenten des stationären Bezugsrahmen sind, P die Wirkleistung ist, $v_g$ ein Spannungsmodul der beiden Spannungskomponenten des stationären Bezugsrahmen ist, und $\lambda_\alpha$ und $\lambda_\beta$ die stationären Flusskomponenten des virtuellen Flusses sind, wobei das Schätzungsblock (B) dazu ausgebildet ist, die momentane Blindleistung (Q) gemäß der Gleichung

$$Q = \frac{3}{2}\left(v_{\beta g} i_{\alpha g} - v_{\alpha g} i_{\beta g}\right),$$

zu berechnen, wobei Q die Blindleistung ist.

7. Leistungswandlungssystem nach den Ansprüchen 1 bis 6, wobei das Synchronisationsblock (C) zusätzlich einen Wirkstrombegrenzer (C2) zum Erhalten eines aktiven Einstellwertes ($\Delta\omega_2$) für die innere Frequenz ($\omega_i$) umfasst und das genannte Synchronisationsblock (C) dazu ausgebildet ist, den genannten aktiven Einstellwert ($\Delta\omega_2$) von der genannten inneren Frequenz ($\omega_i$) zu subtrahieren, wobei das Ergebnis der genannten Subtraktion der Eingang des zweiten Integrators ($I_{2C}$) des genannten Synchronisationsblocks (C) ist, wobei der Wirkstrombegrenzer (C2) dazu ausgebildet ist, den genannten aktiven Einstellwert ($\Delta\omega_2$) basierend auf der berechneten Wirkleistung (P) und auf einem maximalen Wirkstromwert ($I_{act\_max}$) vorbestimmt für einen inneren Wirkstrom ($I_{act}$) des Systems (100) zu erhalten und den inneren Wirkstrom ($I_{act}$) basierend auf der berechneten Wirkleistung (P) und auf dem Spannungsmodul ($v_g$) gemäß der Gleichung $I_{act} = \frac{2}{3}\left(\frac{P}{v_g}\right)$ zu erhalten, wobei $I_{act}$ der innere Wirkstrom ist, P die Wirkleistung ist und $v_g$ das Spannungsmodul ist.

8. Leistungswandlungssystem nach Anspruch 7, wobei der Wirkstrombegrenzer (C2) dazu ausgebildet ist, einen Unterschied zwischen dem Wirkstrom ($I_{act}$) und dem vorbestimmten maximalen Wirkstromwert ($I_{act\_max}$), beide positiv und negativ, zu berechnen, das Ergebnis mittels einer jeweiligen Steuerung ($R_{C2}$) zu steuern und den Ausgang beider Steuerungen ($R_{C2}$) zusammenzurechnen, wobei das Ergebnis dieser Summe der aktive Einstellwert ($\Delta\omega_2$) ist.

9. Leistungswandlungssystem nach einem der Ansprüche 6 bis 8, wobei das Synchronisationsblock (C) zusätzlich einen Leistungsstabilisator (C1) ausgebildet zum Erhalten eines Leistungeinstellwertes ($\Delta\omega_1$) umfasst, und das genannte Synchronisationsblock (C) dazu ausgebildet ist, den genannten aktiven Einstellwert ($\Delta\omega_2$) von der genannten inneren Frequenz ($\omega_i$) zu subtrahieren, wobei das Ergebnis der genannten Subtraktion der Eingang des zweiten Integrators ($I_{2C}$) des genannten Synchronisationsblocks (C) ist, wobei der Leistungsstabilisator (C1) dazu ausgebildet ist, den Unterschied zwischen der Wirkleistung (P) und einem Hilfssignal ($\Delta z$) zu berechnen, um den genannten Unterschied als Eingang für einen Integrator ($I_{C1}$) des genannten Leistungsstabilisators (C1), mit einer spezifischen Integrationskonstante ($T_w$), zu verwenden, wobei der Ausgang des Integrators ($I_{C1}$) das Hilfssignal ($\Delta z$) ist, und das genannte Hilfssignal ($\Delta z$) von der Wirkleistung (P) zu subtrahieren, wobei das Ergebnis der genannten Subtraktion der Leistungseinstellwert ($\Delta\omega_1$) ist.

10. Leistungswandlungssystem nach Anspruch 1 bis 5, wobei das Schätzungsblock (B) ein erstes Schätzungsteilblock (B1) ausgebildet zum Umwandeln der Momentanspannungen ($v_{ag}$, $v_{bg}$, $v_{cg}$) in zwei Spannungskomponenten ($v_{\alpha g}$, $v_{\beta g}$) eines stationären Bezugsrahmens, ein zweites Schätzungsteilblock (B2) zum Umwandeln der Momentanströme ($i_{ag}$, $i_{bg}$, $i_{cg}$) in zwei Stromkomponenten ($i_{\alpha g}$, $i_{\beta g}$) eines stationären Bezugsrahmens; und ein drittes Schätzungsteilblock (B3) zum Berechnen mindestens der momentanen Wirkleistung (P), der momentan Blindleistung (Q), eines Spannungsmoduls ($v_g$) und der stationären Flusskomponenten ($\lambda_\alpha$, $\lambda_\beta$) des virtuellen Flusses gemäß den Gleichungen

$$P = \frac{3}{2}\left(v_{\alpha g} i_{\alpha g} + v_{\beta g} i_{\beta g}\right),$$

$$Q = \frac{3}{2}\left(v_{\beta g} i_{\alpha g} - v_{\alpha g} i_{\beta g}\right),$$

$$v_g = \sqrt{v_{\alpha g}^2 + v_{\beta g}^2},$$

$$\lambda_\alpha = L_f i_{\alpha g} + \int v_{\alpha g}\, dt\,,$$

$$\lambda_\beta = L_f i_{\beta g} + \int v_{\beta g}\, dt\,,$$

umfasst, wobei $i_{\alpha g}$ und $i_{\beta g}$ zwei Stromkomponenten des stationären Bezugsrahmen sind, $v_{\alpha g}$ und $v_{\beta g}$ die beiden Spannungskomponenten des stationären Bezugsrahmen sind, P die Wirkleistung ist, Q die Blindleistung ist, $v_g$ ein Spannungsmodul der beiden Spannungskomponenten des stationären Bezugsrahmen ist und $\lambda_\alpha$ und $\lambda_\beta$ die stationären Flusskomponenten des virtuellen Flusses sind.

## Revendications

1. Système de conversion d'alimentation comprenant un convertisseur électronique d'alimentation (1) avec une pluralité de commutateurs contrôlables (1.3) ; des terminaux de courant alternatif triphasé ($T_{CA}$) connectables à une charge de CA (5) et connectés à une sortie triphasée du convertisseur (1) ; un filtre de sortie (2) comprenant au moins une impédance inductive ($L_f$) et connecté entre lesdits terminaux ($T_{CA}$) et ladite sortie du convertisseur (1) ; des moyens de détection pour détecter la tension instantanée ($v_{ag}$, $v_{bg}$, $v_{cg}$) et le courant instantané ($i_{ag}$, $i_{bg}$, $i_{cg}$) à chaque terminal ($T_{CA}$) du système (100) ; et une unité de contrôle (4) en communication avec le convertisseur (1) et avec les moyens de détection, et configurée pour générer des signaux de contrôle ($S_{1...6}$) pour contrôler l'état des commutateurs (1.3) dudit convertisseur (1) sur la base de signaux de référence, **caractérisé en ce que** l'unité de contrôle (4) comprend un schéma de contrôle avec un bloc d'estimation (B) configuré pour calculer la puissance active instantanée (P) et deux composantes de flux stationnaires ($\lambda_\alpha$, $\lambda_\beta$) d'un flux virtuel du système (100), sur la base des tensions instantanées mesurées ($v_{ag}$, $v_{bg}$, $v_{cg}$) et les courants instantanés ($i_{ag}$, $i_{bg}$, $i_{cg}$) ; un bloc de contrôle (E) configuré pour transformer lesdites composantes de flux stationnaires ($\lambda_\alpha$, $\lambda_\beta$) en une composante de flux rotative direct ($\lambda_d$) et une composante de flux rotative en quadrature ($\lambda_q$), en considérant un angle de contrôle ($\theta$) ; et un bloc de synchronisation (C) configuré pour calculer l'angle de contrôle ($\theta$) sur la base d'au moins une fréquence nominale préétablie ($w_o$) pour les tensions instantanées mesurées ($v_{ag}$, $v_{bg}$, $v_{cg}$) et la puissance active calculée (P), le bloc de contrôle (E) étant en outre configuré pour calculer une composante de tension rotative directe ($e_{dg}$) et une composante de tension rotative en quadrature ($e_{qg}$) d'une tension interne du système (100), sur la base de des composantes de flux rotatives ($\lambda_d$, $\lambda_q$), et pour calculer des tensions internes instantanées de référence ($e_{ag}$, $e_{bg}$, $e_{cg}$) du système (100) sur la base desdites composantes de tension rotatives ($e_{dg}$, $e_{qg}$) et l'angle de contrôle ($\theta$), lesdites tensions internes instantanées de référence ($e_{ag}$, $e_{bg}$, $e_{cg}$) étant les signaux de référence pour générer les signaux de contrôle ($S_{1...6}$), le bloc de synchronisation (C) comprenant un premier opérateur ($O_{1C}$) configuré pour calculer la différence entre la puissance active mesurée (P) et une puissance active de référence (P*) ; un premier intégrateur ($I_{1c}$), avec une constante d'inertie prédéterminée (J), dont l'entrée est la sortie du premier opérateur ($O_{1C}$) et dont la sortie est une fréquence interne ($\omega_i$) du système (100) ; et un deuxième intégrateur ($I_{2c}$) configuré pour intégrer ladite fréquence interne ($\omega_i$) et produire l'angle de contrôle ($\theta$) comme un résultat, ledit bloc de synchronisation (C) étant également configuré pour calculer une différence entre la fréquence nominale ($w_o$) et la fréquence interne ($\omega_i$), pour multiplier la différence résultant avec une constante d'amortissement (C3), et pour soustraire le résultat de ladite multiplication, ainsi que la puissance active (P), de la puissance réactive (P*), le résultat total de ladite soustraction étant l'entrée du premier intégrateur ($I_{1c}$).

2. Système de conversion d'alimentation selon la revendication 1, dans lequel l'unité de contrôle (4) comprend un bloc de référence (D) configuré pour calculer un module de flux virtuel ($\lambda$*) sur la base d'une puissance réactive de référence (Q*) ou un module de tension instantanée de référence ($v_g$*), le bloc de contrôle (E) étant en outre configuré pour calculer la différence entre le module de flux virtuel ($\lambda$*) et la composante de flux rotative direct ($\lambda_d$), et ledit bloc de contrôle (E) comprenant un premier contrôleur (R1), préférablement un contrôleur proportionnel intégral, dont l'entrée est ladite différence et dont la sortie est la composante de tension rotative directe ($e_{dg}$) de la tension interne du système (100), et un deuxième contrôleur (R2), préférablement un contrôleur proportionnel intégral, dont l'entrée est la composante de flux rotative direct ($\lambda_d$) et dont la sortie est la composante de tension rotative en quadrature ($e_{qg}$) de ladite tension interne du système (100).

3. Système de conversion d'alimentation selon la revendication 2, dans lequel le bloc d'estimation (B) est configuré pour calculer un module de tension ($v_g$) sur la base des tensions instantanées mesurées ($v_{ag}$, $v_{bg}$, $v_{cg}$), le bloc de référence (D) étant configuré pour calculer le module de flux virtuel ($\lambda$*) sur la base d'un signal de référence venant de la différence entre une puissance réactive de référence (Q*) et la puissance réactive calculée (Q), et/ou de la différence entre un module de tension instantanée de référence ($v_g$*) et le module de tension ($v_g$).

4. Système de conversion d'alimentation selon la revendication 3, dans lequel le bloc de référence (D) est configuré pour calculer le module de flux virtuel ($\lambda$*) comme le résultat de la différence entre le signal de référence et une valeur de réglage du flux ($\Delta\lambda$) pour le module de flux virtuel ($\lambda$*), l'unité de contrôle (4) comprenant un limiteur de courant réactif (D1) pour obtenir ladite valeur de réglage du flux ($\Delta\lambda$), ledit limiteur de courant réactif (D1) étant configuré pour obtenir ladite valeur de réglage du flux ($\Delta\lambda$) sur la base de la puissance réactive calculée (Q) et une valeur de courant réactif maximale ($I_{react\_max}$) préétablie pour un courant réactif interne ($I_{react}$) du système (100) et pour obtenir le courant réactif interne ($I_{react}$) sur la base de la puissance réactive calculée (Q) et le module de tension

($v_g$) calculé dans le bloc d'estimation (B) selon l'équation $I_{react} = \frac{2}{3}\left(\frac{Q}{v_g}\right)$, dans laquelle $I_{react}$ est le courant réactif interne, Q est la puissance réactive et $v_g$ est le module de tension.

5. Système de conversion d'alimentation selon la revendication 4, dans lequel le limiteur de courant réactif (D1) est configuré pour calculer une différence entre le courant réactif ($I_{react}$) et la valeur de courant réactif maximale préétablie ($I_{react\_max}$), tant positive que négative, pour contrôler le résultat au moyen d'un contrôleur respectif ($R_{D1}$), et pour additionner la sortie des deux contrôleurs ($R_{D1}$) l'une à l'autre, le résultat de ladite somme étant la valeur de réglage du flux ($\Delta\lambda$).

6. Système de conversion d'alimentation selon l'une quelconque des revendications 3 à 5, dans lequel le bloc d'estimation (B) comprend un premier sous-bloc d'estimation (B1) configuré pour transformer les tensions instantanées ($v_{ag}$, $v_{bg}$, $v_{cg}$) en deux composantes de tension ($v_{\alpha g}$, $v_{\beta g}$) d'un cadre de référence stationnaire, un deuxième sous-bloc d'estimation (B2) pour transformer les courants instantanés ($i_{ag}$, $i_{bg}$, $i_{cg}$) en deux composantes de courant ($i_{\alpha g}$, $i_{\beta g}$) d'un cadre de référence stationnaire ; et un troisième sous-bloc d'estimation (B3) pour calculer au moins la puissance active instantanée (P), un module de tension ($v_g$) et les composantes de flux stationnaires ($\lambda_\alpha$, $\lambda_\beta$) du flux virtuel selon les équations :

$$P = \frac{3}{2}\left(v_{\alpha g} i_{\alpha g} + v_{\beta g} i_{\beta g}\right),$$

$$v_g = \sqrt{v_{\alpha g}^2 + v_{\beta g}^2},$$

$$\lambda_\alpha = L_f i_{\alpha g} + \int v_{\alpha g}\, dt,$$

$$\lambda_\beta = L_f i_{\beta g} + \int v_{\beta g}\, dt.$$

dans lesquelles $i_{\alpha g}$ et $i_{\beta g}$ sont les deux composantes de courant du cadre de référence stationnaire, $v_{\alpha g}$ et $v_{\beta g}$ sont les deux composantes de tension du cadre de référence stationnaire, P est la puissance active, $v_g$ est un module de tension des deux composantes de tension du cadre de référence stationnaire et $\lambda_\alpha$ et $\lambda_\beta$ sont les composantes de flux stationnaires du flux virtuel, le bloc d'estimation (B) étant configuré pour calculer la puissance réactive instantanée (Q) selon l'équation

$$Q = \frac{3}{2}\left(v_{\beta g} i_{\alpha g} - v_{\alpha g} i_{\beta g}\right),$$

dans laquelle Q est la puissance réactive.

**7.** Système de conversion d'alimentation selon l'une quelconque des revendications 1 à 6, dans lequel le bloc de synchronisation (C) comprend en outre un limiteur de courant actif (C2) pour obtenir une valeur de réglage active ($\Delta\omega_2$) pour la fréquence interne ($\omega_i$) et ledit bloc de synchronisation (C) est configuré pour soustraire ladite valeur de réglage active ($\Delta\omega_2$) depuis ladite fréquence interne ($\omega_i$), le résultat de ladite soustraction étant l'entrée du deuxième intégrateur ($I_{2c}$) dudit bloc de synchronisation (C), le limiteur de courant actif (C2) étant configuré pour obtenir ladite valeur de réglage active ($\Delta\omega_2$) sur la base de la puissance active calculée (P) et sur une valeur de courant actif maximale ($I_{act\_max}$) préétablie pour un courant actif interne ($I_{act}$) du système (100) et pour obtenir le courant actif interne ($I_{act}$) sur la base de la puissance active calculée (P) et le module de tension ($v_g$) selon l'équation

$$I_{act} = \frac{2}{3}\left(\frac{P}{v_g}\right)$$ , dans laquelle $I_{act}$ est le courant actif interne, P est la puissance active et $v_g$ est le module de tension.

**8.** Système de conversion d'alimentation selon la revendication 7, dans lequel le limiteur de courant actif (C2) est configuré pour calculer une différence entre le courant actif ($I_{act}$) et la valeur de courant actif maximale préétablie ($I_{act\_max}$), tant positive que négative, pour contrôler le résultat au moyen d'un contrôleur respectif ($R_{c2}$), et pour additionner la sortie des deux contrôleurs ($R_{C2}$) l'une à l'autre, le résultat de ladite somme étant la valeur de réglage active ($\Delta\omega_2$).

**9.** Système de conversion d'alimentation selon l'une quelconque des revendications 6 à 8, dans lequel le bloc de synchronisation (C) comprend en outre un stabilisateur de puissance (C1) configuré pour obtenir une valeur de réglage de puissance ($\Delta\omega_1$) et ledit bloc de synchronisation (C) est configuré pour soustraire ladite valeur de réglage active ($\Delta\omega_2$) depuis ladite fréquence interne ($\omega_i$), le résultat de ladite soustraction étant l'entrée du deuxième intégrateur ($I_{2c}$) dudit bloc de synchronisation (C), le stabilisateur de puissance (C1) étant configuré pour calculer la différence entre la puissance active (P) et un signal auxiliaire ($\Delta z$), pour utiliser ladite différence comme entrée pour un intégrateur ($I_{c1}$) dudit stabilisateur de puissance (C1), avec une constante d'intégration spécifique ($T_w$), la sortie de l'intégrateur ($I_{c1}$) étant le signal auxiliaire ($\Delta z$), et pour soustraire ledit signal auxiliaire ($\Delta z$) de la puissance active (P), le résultat de ladite soustraction étant la valeur de réglage de puissance ($\Delta\omega_1$).

10. Système de conversion d'alimentation selon l'une quelconque des revendications 1 à 5, dans lequel le bloc d'estimation (B) comprend un premier sous-bloc d'estimation (B1) configuré pour transformer les tensions instantanées ($v_{ag}$, $v_{bg}$, $v_{cg}$) en deux composantes de tension ($v_{\alpha g}$, $v_{\beta g}$) d'un cadre de référence stationnaire, un deuxième sous-bloc d'estimation (B2) pour transformer les courants instantanés ($i_{ag}$, $i_{bg}$, $i_{cg}$) en deux composantes de courant ($i_{\alpha g}$, $i_{\beta g}$) d'un cadre de référence stationnaire ; et un troisième sous-bloc d'estimation (B3) pour calculer au moins la puissance active instantanée (P), la puissance réactive instantanée (Q), un module de tension ($v_g$), et les composantes de flux stationnaires ($\lambda_\alpha$, $\lambda_\beta$) du flux virtuel selon les équations

$$P = \frac{3}{2}\left(v_{\alpha g}i_{\alpha g} + v_{\beta g}i_{\beta g}\right),$$

$$Q = \frac{3}{2}\left(v_{\beta g}i_{\alpha g} - v_{\alpha g}i_{\beta g}\right),$$

$$v_g = \sqrt{v_{\alpha g}^2 + v_{\beta g}^2},$$

$$\lambda_\alpha = L_f i_{\alpha g} + \int v_{\alpha g}\,dt,$$

$$\lambda_\beta = L_f i_{\beta g} + \int v_{\beta g}\,dt.$$

dans lesquelles $i_{\alpha g}$ et $i_{\beta g}$ sont les deux composantes de courant du cadre de référence stationnaire, $v_{\alpha g}$ et $v_{\beta g}$ sont les deux composantes de tension du cadre de référence stationnaire, P est la puissance active, Q est la puissance réactive, $v_g$ est un module de tension des deux composantes de tension du cadre de référence stationnaire et $\lambda_\alpha$ et $\lambda_\beta$ sont les composantes de flux stationnaires du flux virtuel.

Fig. 1

Fig. 2

Fig. 3

Fig. 4

Fig. 5

Fig. 6a

Fig. 6b

Fig. 6c

Fig. 7

Fig. 8

Fig. 9

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 2021249862 A1

**Non-patent literature cited in the description**

- Synchronverter small-signal modelling and eigenvalue analysis for battery systems integration. **RODRIGUEZ-CABRERO et al.** 2017 IEEE 6TH INTERNATIONAL CONFERENCE ON RENEWABLE ENERGY RESEARCH AND APPLICATIONS (ICRERA). IEEE, 05 November 2017, 780-784

- Black-Start Capability of DFIG Wind Turbines Through a Grid-Forming Control Based on the Rotor Flux Orientation. **RORDRIGUEZ-AMENEDO et al.** IEEE ACCESS. IEEE, 15 October 2021, vol. 9, 142910-142924